(19) Europäisches Patentamt / European Patent Office / Office européen des brevets

(11) **EP 2 444 880 A2**

(12) **EUROPEAN PATENT APPLICATION**

(43) Date of publication:
**25.04.2012 Bulletin 2012/17**

(51) Int Cl.:
***G06F 3/044*** *(2006.01)*

(21) Application number: **11186196.9**

(22) Date of filing: **21.10.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **22.10.2010 JP 2010237356**

(71) Applicants:
 • **Hitachi Displays, Ltd.**
 **Mobara-shi**
 **Chiba (JP)**

 • **Panasonic Liquid Crystal Display Co., Ltd.**
 **Shikama-ku, Himeji-shi**
 **Hyogo**
 **672-8033 (JP)**

(72) Inventor: **Sekiguchi, Shinji**
 **Chiba (JP)**

(74) Representative: **Beetz & Partner**
 **Patentanwälte**
 **Steinsdorfstrasse 10**
 **80538 München (DE)**

(54) **Touch panel**

(57) The touch panel according to the present invention is a touch panel of a capacitive coupling type, having: a first substrate (XYES) on which a coordinate detecting electrode for detecting XY coordinates of a point is formed; and a second substrate (UP) provided so as to face the above described first substrate, wherein the above described second substrate (UP) is provided with an elastic layer (EL) having a rigidity lower than the above described second substrate and a conductive layer (CL), the above described elastic layer (EL) and the above described conductive layer (CL) are layered in this order towards the above described first substrate (XYES), a non-conductive spacer (SP) is provided between the coordinated detecting electrode and the conductive layer, and a space created by the spacer is filled in with a liquid (LQ).

FIG.11

EP 2 444 880 A2

## Description

The present application claims priority over Japanese Application JP2010-237356 filed on October 22, 2010, the contents of which are hereby incorporated into this application by reference.

BACKGROUND OF THE INVENTION

(1) Field of the Invention

The present invention relates to a touch panel, and in particular, to a capacitive coupling type touch panel, which is a touch panel with which an input operation is possible using a non-conductive pen or the like.

(2) Description of the Related Art

Display devices that also function as an input device (hereinafter referred to as touch panels) through which information is inputted when the display screen is touched with a finger of the user (operation thorough contact or pressing operation, hereinafter simply referred to as touching) are used for mobile electronics, such as PDA's and portable terminals, various types of home electronics and fixed customer helping terminals, such as automatic teller machines. As for the method for driving such touch panels, a resistive film type where a change in the resistance value of the touched portion is detected, a capacitive coupling type where a change in the capacitance is detected, an optical sensor type where a change in the amount of light from the portion that has been shielded when touched is detected, and the like, have been known.

The capacitive coupling type has the following advantages as compared to the resistive film type or the optical sensor type. One example is that the capacitive coupling type has a transmittance as high as approximately 90 %, and thus, the display quality is not low, as compared to the resistive film type and the optical sensor type where the transmittance is as low as 80 %. In addition, in the resistive film type, the touched point is sensed through physical contact with the resistive film, and therefore, there is a risk that the resistive film may deteriorate or be broken (cracked), while in the capacitive coupling type, the electrodes for detection do not make physical contact such as contact with another electrode, and therefore, this type is advantageous from the point of view of durability.

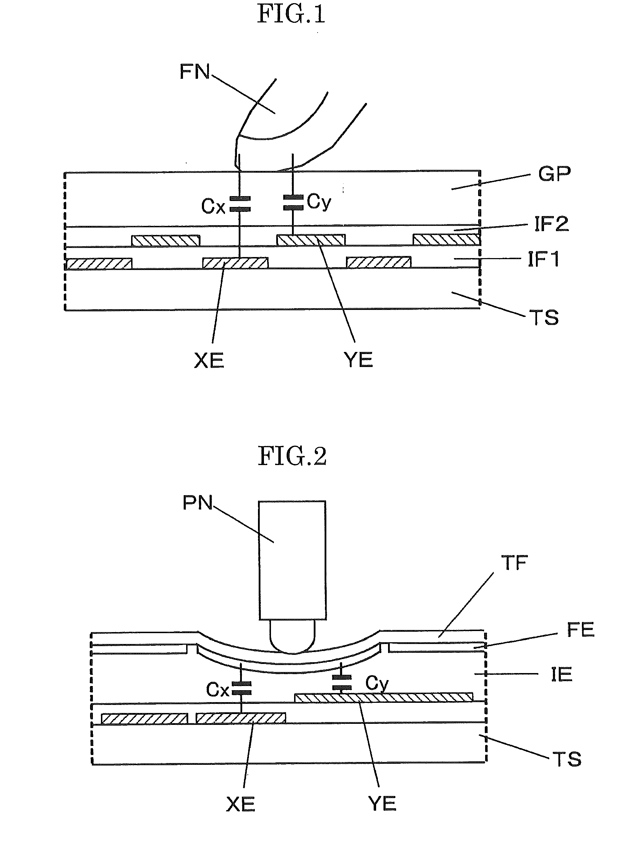

As shown in FIG. 1, some touch panels of the capacitive coupling type use a change in the capacitance with a finger FN (Cx, Cy). The X axis electrodes XE and Y axis electrodes YE are formed on and above a transparent substrate TS with insulating layers IF1 and IF2 in between. A protective plate (film) GP is provided on the upper surface of the insulating layer IF2.

In the type shown in FIG. 1, the input means must be a conductive substance such as a finger FN. Therefore, in the case where a non-conductive pen such as a resin stylus used for the resistive film type and the like is made to make contact with the touch panel in FIG. 1, there is almost no change in the capacitance of the electrodes, and therefore, the coordinates of the point of input cannot be detected. A technology for solving this problem is described in JP2009-258888A. In accordance with the technology described in JP2009-258888A, coordinates can be detected in the case where a non-conductive input means is made to make contact with a touch panel.

SUMMARY OF THE INVENTION

An object of the present invention is to provide a touch panel having a high transmittance and a high sensitivity for detecting the capacitance where the detection signal is prevented from being delayed.

In order to achieve the above described object, the touch panel according to the present invention is characterized by the following features.

(1) A touch panel of a capacitive coupling type, having: a first substrate on which a coordinate detecting electrode for detecting XY coordinates of a point is formed; and a second substrate provided so as to face the above described first substrate, characterized in that the above described second substrate is provided with an elastic layer having a rigidity lower than the above described second substrate and a conductive layer, the above described elastic layer and the above described conductive layer are layered in this order towards the above described first substrate, a non-conductive spacer is provided between the coordinated detecting electrode and the conductive layer, and a space created by the spacer is filled in with a liquid.

(2) The touch panel according to the above (1), characterized in that the conductive layer is carried on a resin film.

(3) The touch panel according to the above (2), characterized in that the conductive layer is formed on the resin film on the first substrate side.

(4) The touch panel according to the above (1), characterized in that the elastic layer and the conductive layer are the same layer.

(5) The touch panel according to the above (1), characterized in that the elastic layer is thicker than the space created by the spacer.

(6) The touch panel according to the above (1), characterized in that an insulating film is formed on the coordinate detecting electrode and the spacer makes contact with the insulating film.

(7) The touch panel according to the above (1), characterized in that the spacer is a bead or a protrusion formed on one of the facing surfaces of the above described first and second substrates that face each other.

(8) The touch panel according to the above (1), characterized in that the space created by the spacer is 20 $\mu$m or less.

(9) A touch panel of a capacitive coupling type, having: a first substrate on which a coordinate detecting electrode for detecting XY coordinates of a point is formed; and a second substrate provided so as to face the above described first substrate, characterized in that the above described first substrate is provide with an elastic layer having a rigidity lower than the above described second substrate and a conductive layer, the above described elastic layer and the above described conductive layer are layered in this order from the coordinate detecting electrode towards the above described second substrate, a non-conductive spacer is provided between the above described second substrate and the conductive layer, and a space created by the spacer is filled in with a liquid.

(10) The touch panel according to the above (9), characterized in that the conductive layer is carried on a resin film.

(11) The touch panel according to the above (10), characterized in that the conductive layer is formed on the resin film on the first substrate side.

(12) The touch panel according to the above (9), characterized in that the elastic layer and the conductive layer are the same layer.

(13) The touch panel according to the above (9), characterized in that the elastic layer is thicker than the space created by the spacer.

(14) The touch panel according to the above (9), characterized in that the spacer is a bead or a protrusion formed on one of the facing surfaces of the above described first and second substrates that face each other.

(15) The touch panel according to the above (9), characterized in that the space created by the spacer is 20 $\mu$m or less.

(16) The touch panel according to the above (1) or (9), characterized in that a non-conductive pen, with which a surface of the second substrate is pressed, is used to operate the touch panel.

(17) The touch panel according to the above (1) or (9), characterized in that the touch panel is provided on a liquid crystal display device or an organic electroluminescent display device on the display screen side.

In the touch panel according to the present invention, the space created by the non-conductive spacer is filled in with a liquid so that light can be prevented from reflecting from the interface, and thus, the transmittance increases. Furthermore, Newton rings do not appear and therefore, the width of the space in which the spacer is provided can be reduced and the sensitivity for detecting the capacitance can also be increased. In addition, the fluidity of the used liquid is limited by the spacer, and therefore, the period of time during which the conductive layer returns to its original state after the pressure is released can be shortened, and thus, it becomes possible to prevent the detection signal from being delayed.

BRIEF DESCRIPTION OF THE DRAWINGS

FIG. 1 is a diagram illustrating a capacitive coupling type touch panel, which is operative with a finger or the like according to the prior art;
FIG. 2 is a diagram illustrating a capacitive coupling type touch panel, which is operative with a non-conductive pen according to the prior art;
FIG. 3 is a diagram illustrating an example in the case where the touch panel in FIG. 2 is operated with a finger or the like;
FIG. 4 is a diagram illustrating the difference in a model in the case where a solid is used in the elastic layer;
FIG. 5 is a diagram illustrating a deformed state in the case where the uppermost layer in FIG. 4 is a PET film;
FIG. 6 is a diagram illustrating a deformed state in the case where the uppermost layer in FIG. 4 is a glass plate;
FIG. 7 is a diagram illustrating how an error occurs in sensing the touched point when the uppermost layer is bent in the case where the uppermost layer is a glass plate;
FIGS. 8A and 8B are diagrams illustrating how an error occurs in sensing the touched point in the case where the uppermost layer is a PET film and the elastic layer includes a liquid;
FIG. 9 is a diagram illustrating the basic structure of a novel capacitive type touch panel;
FIG. 10 is a diagram illustrating how the touch panel in FIG. 9 is operated;
FIG. 11 is a diagram illustrating the touch panel according to the first embodiment of the present invention;
FIG. 12 is a diagram showing the structure of a system provided with the touch panel according to the present invention and a display device;
FIG. 13 is a plan diagram showing the structure of electrodes in the touch panel;
FIG. 14 is a diagram illustrating the touch panel according to the second embodiment of the present invention;
FIG. 15 is a diagram illustrating the touch panel according to the third embodiment of the present invention;
FIGS. 16A and 16B are diagrams illustrating the state of operation of the touch panel in FIG. 14;
FIG. 17 is a diagram illustrating the touch panel according to the fourth embodiment of the present invention; and
FIG. 18 is a diagram illustrating the state of operation of the touch panel in FIG. 17.

DESCRIPTION OF THE EMBODIMENTS

In the following, the embodiments of the present inventions are described in detail in reference with the drawings.

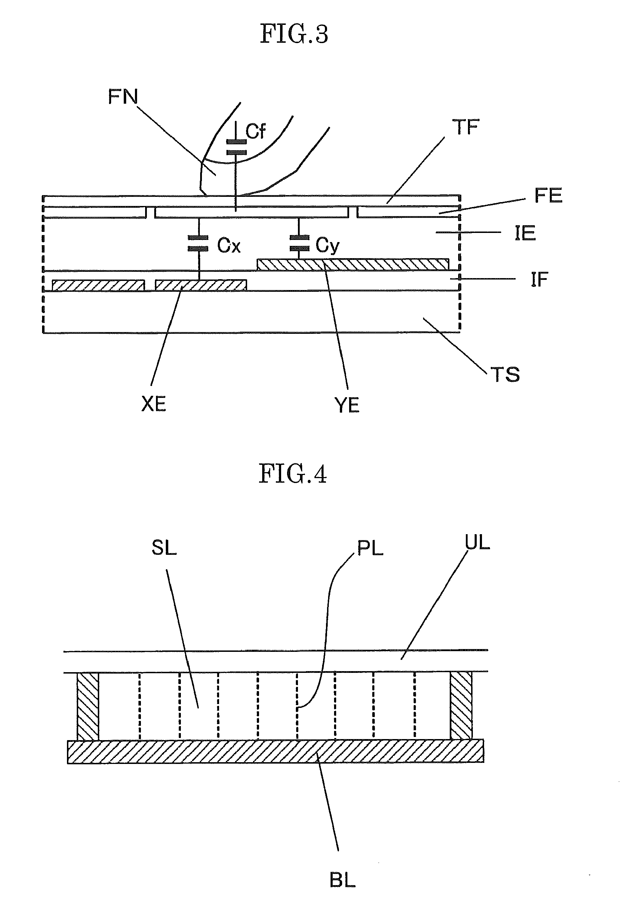

As shown in FIG. 2, a certain touch panel of the capacitive coupling type is made of an elastic insulating layer IE and electrodes FE in island form patterned on a transparent film TF. At the time of input, the transparent film TF is pressed with a pen PN so that the elastic layer IE is deformed, and thus, the capacitance (Cx, Cy) between an island electrodes FE and an X-Y electrode (XE, YE) changes so that the coordinates of the point of input can be detected in the configuration. Furthermore, as shown in FIG. 3, an input operation is also possible by pressing the transparent film TF with a finger FN.

In order for this elastic insulating layer to be provided for use, it is necessary for the elastic material and the protective plate (film) to satisfy the following conditions, for example.
(Elastic material)

• The ratio in the deformation is 60 % or more when the lowest load of 80 g is applied.
• The form recovers after the load is released.
• The optical transmittance is 90 % or higher.
• The elastic material is not broken even when the maximum load of 1500 g is applied.

(Protective plate/film)

• Resistance to scratch is high.

Furthermore, when the two are combined to form a touch panel, it is required for the two not to deform in the portion between the two points that are pressed at the same time.

In touch panels of the capacitive coupling type, which use elastic deformation as that shown in FIG. 2, it is possible for the uppermost layer to be made of a plate, such as a glass substrate or an acryl plate, or a resin film such as of PET. In addition, it is possible for the elastic insulating layer to include a solid such as rubber (including a gel), a liquid such as an oil, or a gas such as air.

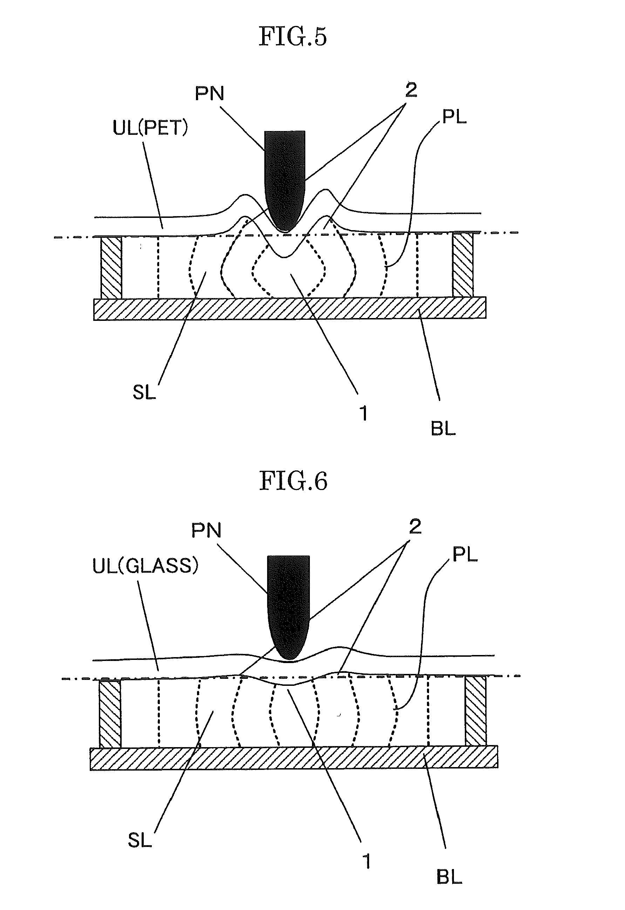

In the case where the elastic insulating layer is made of a solid, however, problems as shown in FIGS. 4 to 6 arise. FIG. 4 is a schematic diagram showing the structure where an elastic solid SL is provided on top of a substrate BL, and in addition, the uppermost layer UL is provided. The dotted lines PL show the deformed state. As shown in FIG. 5, in the case where the uppermost layer UL is a PET film, the portion (1) directly beneath the portion that is pressed with a pen PN is a compressed solid, while the portion (2) around the pressed portion presses back. Therefore, the amount of change is small with the area (region) of the deformation being small, and as a result, the capacitance does not sufficiently change, which makes it difficult to detect the coordinates of the point of input. In addition, as shown in FIG. 6, in the case where the uppermost layer UL is a glass plate, the displacement over which the glass plate is to press back is smaller than in the PET film, and the amount of displacement is small as a whole with the area of the displacement being small as well, and therefore, the change in the capacitance is small.

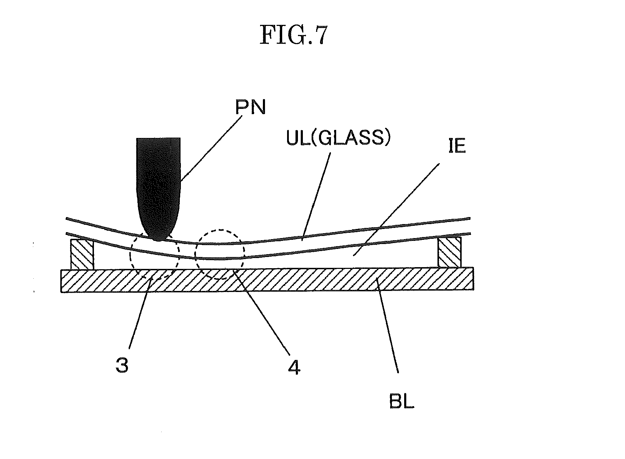

In the case where the elastic insulating layer IE includes a gas, a liquid or a solid, and the uppermost layer UL is a glass plate, as shown in FIG. 7, a portion (4) that is away from a portion (3) may come close to the substrate BL when the portion (3) is pressed by the pen PN and the glass plate is bent. As a result, the portion (4) is erroneously sensed as being pressed.

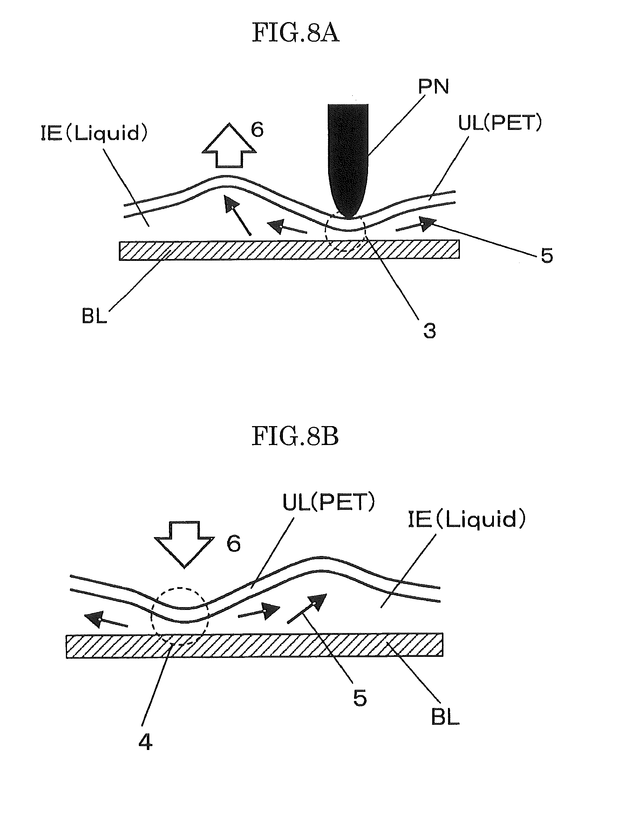

Furthermore, in the case where the elastic insulating layer IE includes a liquid and the uppermost layer UL is a PET film, as shown in FIG 8A, the volume of the liquid is low in the portion (3), which is pressed by the pen PN, and the liquid 5 that has escaped to the periphery pushes up the uppermost layer around the pressed portion (3) so that the surrounding portion is lifted up in the direction of the arrow 6. Next, when the pen PN is released as shown FIG. 8B, the liquid 5 returns to its original position, and thus, the direction of the displacement of the uppermost layer is switched to that represented by the arrow 6 so that the uppermost layer UL comes close to the substrate BL, as shown in the circle 4, which causes an error in sensing the touched point.

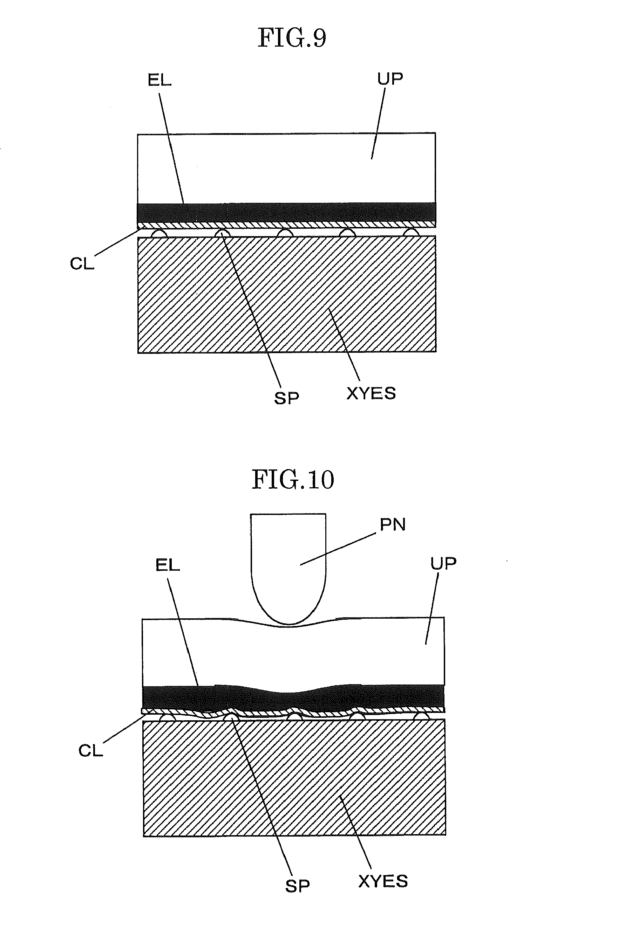

The present inventor has proposed the novel capacitive coupling type touch panel shown in FIG. 9. In FIG. 9, an XY electrode substrate (XYES) where electrodes are formed along the X axis and the Y axis is provided as a first substrate, and in addition, an upper substrate UP having an elastic layer EL and a conductive layer CL, which are layered on top of each other, is provided as a second substrate. In addition, spacers SP are provided so as to intervene between the first substrate and the second substrate so that the two substrates face each other.

When the touch panel in FIG. 9 is pressed with a resin pen PN or the like, as shown in FIG. 10, the upper substrate UP deforms in a wide range through the elastic layer EL, and thus, a change in the capacitance is detected by a number of XY electrodes, and therefore, it is possible to detect the coordinates of the point of input without fail.

The present inventor continued diligent research, and as a result, found that the touch panel in FIG. 9 is useful when it has such a structure that the space in which the spacers SP are provided does not have an air layer.

(1) Light can be prevented from being reflected from the interface vis-à-vis the air layer, and thus, the transmittance can be increased.
(2) Newton ring can be prevented from appearing in the space in which the spacers SP are provided, and thus, the space having a thickness of 30 $\mu$m or less can be provided.
(3) It is possible to reduce the amount of deformation of the second substrate because the sensitivity for detection is high as in the above (2), and therefore, the thickness (hardness) of the uppermost layer (upper substrate) can be set freely.

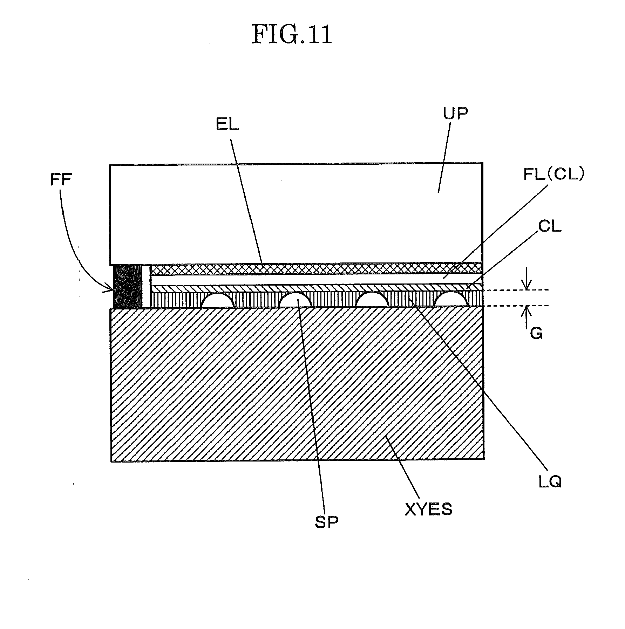

FIG. 11 is a diagram illustrating the touch panel according to the first embodiment of the present invention. The touch panel according to the present invention is a touch panel of a capacitive coupling type, having: a first substrate (XYES) on which a coordinate detecting electrode for detecting XY coordinates of a point is formed; and a second substrate (UP) provided so as to face the above described first substrate, and is characterized in that the above described second substrate (UP) is provided with an elastic layer (EL) having a rigidity lower than the above described second substrate and a conductive layer (CL), the above described elastic layer (EL) and the above described conductive layer (CL) are layered in this order towards the above described first substrate (XYES), a non-conductive spacer (SP) is provided between the coordinated detecting electrode and the conductive layer, and a space created by the spacer is filled in with a liquid (LQ).

In the touch panel in FIG. 11, the conductive layer CL is carried on a resin film FL (which is represented by FL (CL), which means that the resin film FL carries CL). Though it is possible to provide a conductive layer made of a single material, the conductive film can easily return to its original form when it is deformed in the case where the conductive film is carried on a resin film.

The conductive layer CL is a transparent conductive film, which is not particularly limited as long as it is a thin film having a conductivity, and conventional ITO (indium tin oxide), ATO (antimony tin oxide), IZO (indium zinc oxide), and the like, can be used. In addition, thin films where fine particles of conventional ITO (indium tin oxide), ATO (antimony tin oxide), IZO (indium zinc oxide), or the like, are dispersed in a transparent resin, and furthermore, thin films where fine particles having a conductivity, for example, fine metal particles of nickel, gold, silver or cupper, or fine insulating particles or fine resin particles which are plated with a metal are dispersed in a resin can be used. Moreover, fine particle made of a metal oxide or a metal fluoride of at least one type selected from the group consisting of $Al_2O_3$, $Bi_2O_3$, $CeO_2$, $In_2O_3$, $(In_2O_3 \cdot SnO_2)$, $HfO_2$, $La_2O_3$, $MgF_2$, $Sb_2O_5$, $(Sb_2O_5 \cdot SnO_2)$, $SiO_2$, $SnO_2$, $TiO_2$, $Y_2O_3$, ZnO and $ZrO_2$ can be used when dispersed in a transparent resin. In addition, organic conductive materials such as polyaniline, polyacetylene, polyethylene dioxythiophene, polypyrrole, polyisothianaphthene and polyisonaphthothiophene can be used when being applied to fine particles. In addition, it is preferable for the conductive layer CL to have little absorption or scattering of light due to its index of refraction of light or the reflectance of light, and thus, it is preferable to select an appropriate material for the conductive layer CL.

In the case where the resin film FL carries the conductive layer CL, the conductive layer is provided on the resin film on the first substrate side (XY electrodes side) so that the conductive film CL and the XY electrodes can be in close proximity, and thus, it is possible to increase the sensitivity in sensing the touched portion. In addition, in the case where the conductive layer CL is carried on the side opposite to the above described first substrate side, the conductive film CL is not directly pressed by the spacers SP, and therefore, the conductive film can be prevented from being damaged, and thus, it is possible to increase the durability of the touch panel.

Though the structure is different from that in FIG. 11, an elastic conductive material can be used instead of the elastic layer EL and the conductive layer CL as if the two are formed in the same layer. In this case, the number of parts is smaller and the cost for manufacture can be reduced.

In the touch panel according to the present invention, it is preferable for the elastic layer EL to be thicker than the space created by the spacers SP. As a result, it is possible to make the conductive film CL to be closer to the first substrate (XYES) by using the deformation of the elastic layer EL.

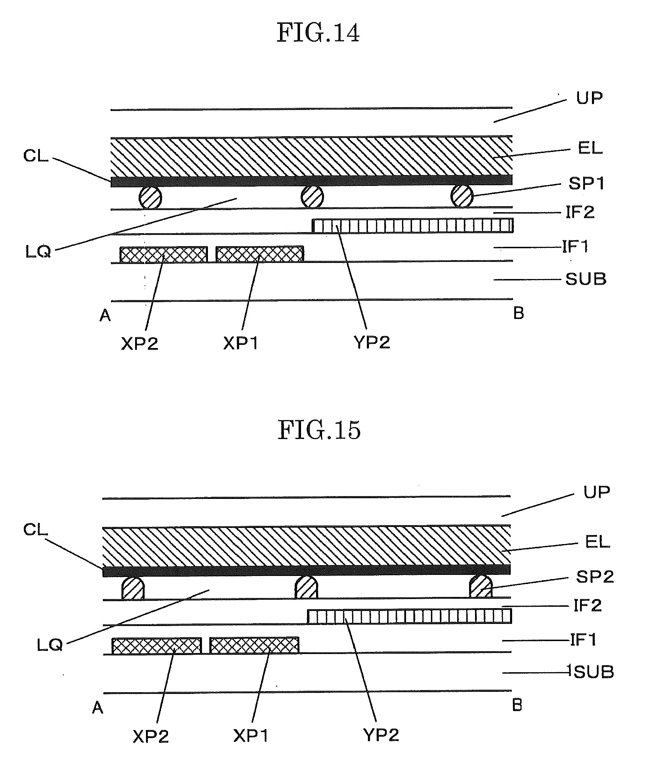

As illustrated in FIGS. 14 and 15, the first substrate (XYES) on which XY electrodes are provided has insulating films (IF1 and IF2) are formed on the coordinate detecting electrodes (XP1, XP2 and YP2) so that the spacers SP make contact with an insulating film in the configuration. These insulating films work as a protective film for the XY electrodes and furthermore make it possible to maintain the distance between the XY electrodes and the conductive film CL at a predetermined value.

As described below, it is possible for the spacers to be beads (see SP1 in FIG. 14) or protrusions formed on at least one of the facing surfaces of the above described first and second substrates (see SP2 in FIG. 15).

The space created by the spacers SP, which is characteristic in the present invention, is filled in with an inactive transparent liquid. Preferable examples are open chain saturated hydrocarbons having a carbon number of 5 to 16, in particular, those having a carbon number of 5 to 8 (from pentane to octane), which are included in gasoline that is a liquid at room temperature, and those having a carbon number of 9 or higher, which are used as light oil (diesel oil) and kerosene, such as nonane, decane, undecane, dodecane, tridecane, tetradecane, pentadecane and hexadecane. In addition, these paraffins are not a uniform substance but a mixture of hydrocarbons having carbon chains of various structures. Mixed paraffins (fluid paraffins), which are liquids at room temperature under normal pressure, nujol, mineral spirit, mineral turpentine, white spirit, white oil, white mineral oil, petroleum spirit, mineral thinner, water paraffin, mineral oil, mineral oil white and the like can be used. Unsaturated hydrocarbons and vinyl bases, part of which is substituted with chlorine, oxygen, a carbonyl base, an amino base, a hydroxyl base or the like, or to which chlorine, oxygen, a carbonyl base, an amino base, a hydroxyl base or the like is combined are highly reactive, and thus, are not appropriate for the present invention, but some organic solvents including alcohols, ethers and esters can be used. The most useful oils that are inactive and of which the viscosity can be freely adjusted are silicone oils (dimethyl silicone oil, methylphenyl silicone oil, methylhydrogen silicone oil), and inactive modified silicone oils, such as polyether modified silicone oil, methylstyryl modified silicone oil, alkyl modified silicone oil, high class aliphatic acid ester modified silicone oil, hydrophilic-specifically modified silicone oil, high class aliphatic acid containing silicone oil and fluorine modified silicone oil can also be used.

When these transparent liquids are used, light can be prevented from being reflected from the interface vis-à-vis the conventional air layer, and thus, the transmittance can be increased. In addition, it is possible to set the space G in FIG. 11 to 20 $\mu$m or less, though a space of 30 $\mu$m or more is necessary according to the prior art in order to prevent Newton rings from appearing.

When the space G is narrow, the distance between the XY electrodes and the conductive film CL is small, and thus, the sensitivity in detection is high. Therefore, the thickness of the uppermost layer UP can be increased. In the case of an acryl plate where the thickness is 0.3 mm before the liquid is injected, it is possible for the thickness to be as great as approximately 0.7 mm after the liquid is injected. In the case of a glass plate where the thickness is 0.2 mm before the liquid is injected, it is possible for the thickness to be as great as approximately 0.5 mm after the liquid is injected. As a result, the appearance of the panel increases (without bending) to the same level as the touch panel (see FIG. 1) through which data can be inputted with a finger (conductor), and in addition, input using a non-conductive pen is possible.

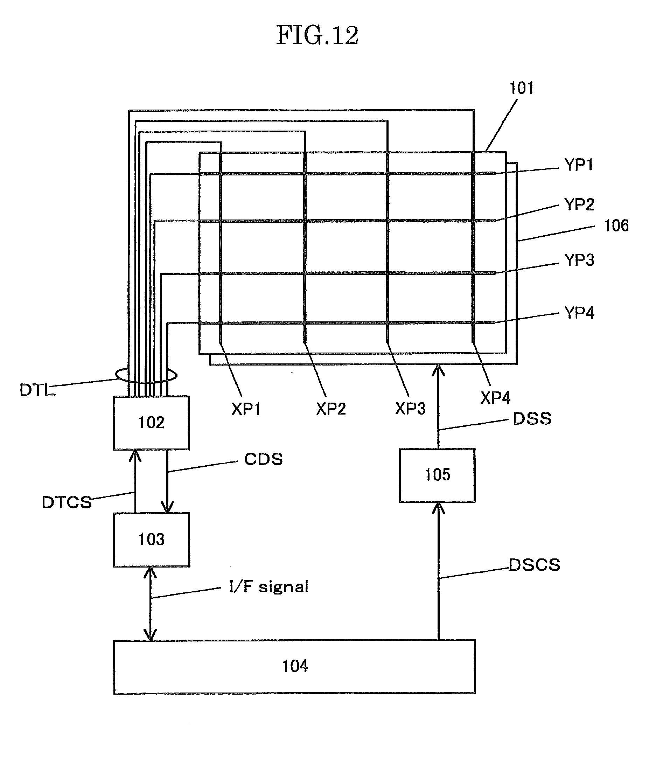

In FIG. 12, 101 is the touch panel according to an embodiment of the present invention. The touch panel 101 has X electrodes XP and Y electrodes YP for detecting the capacitance. Here, the figure shows four X electrodes (XP1 to XP4) and four Y electrodes (YP1 to YP4), but the number of the electrodes is not limited to this.

The touch panel 101 is installed on the front surface of the display unit 106 of a display device. As for the display device, a liquid crystal display device or an organic electroluminescent device is appropriate for use. In the case where the user sees an image displayed on the display device, it is necessary for the display image to be seen through the touch panel, and therefore, it is desirable for the touch panel to have a high transmittance. The X electrodes and the Y electrodes of the touch panel 101 are connected to a capacitance detecting unit 102 through wires for detection (DTL). The capacitance detecting unit 102 is controlled by a detection controlling signal (DTCS) outputted from a control operation unit 103 so as to detect the capacitance of each electrode (X electrode, Y electrode) included in the touch panel, and then, outputs the capacitance detecting signal (CDS), which changes depending on the capacitance of each electrode, to the control operation unit 103. The control operation unit 103 calculates the signal components for each electrode from the capacitance detecting signal (CDS) for each electrode, and at the same time, finds the coordinates of the point of input through the calculation from the signal components of each electrode.

When the coordinates of the point of input are transferred from the touch panel 101 as a result of the touch operation, a system 104 generates a display image in response to this touch operation and transfers the display image to a display controlling circuit 105 as a display controlling signal (DSCS). The display controlling circuit 105 generates a display signal (DSS) in response to the display image transferred in the form of the display controlling signal, and displays the image on the display device.

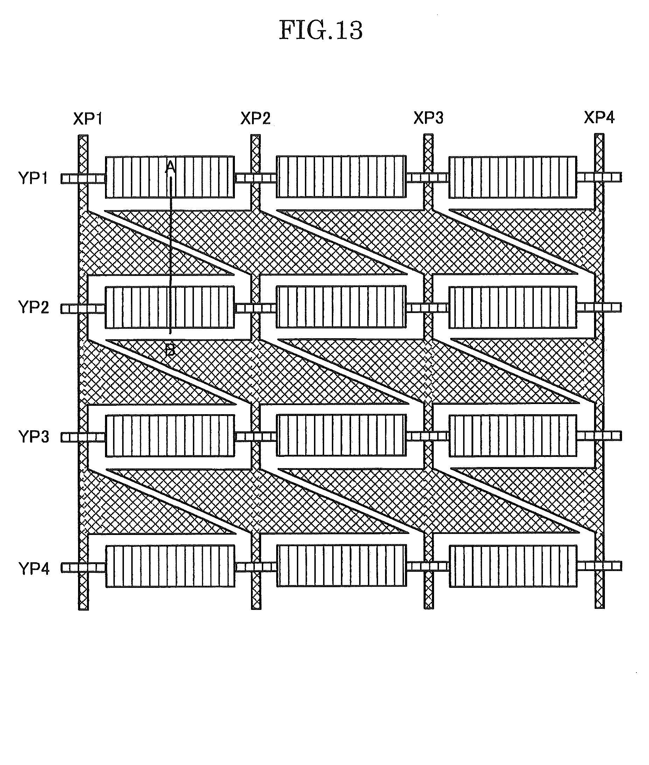

FIG. 13 is a diagram showing an electrode pattern of X electrodes XP and Y electrodes YP for detecting the capacitance in the touch panel 101. The X electrodes XP and the Y electrodes YP are connected to the capacitance detecting unit 102 through the wires for detection DTL. The Y electrodes run in the lateral direction of the touch panel 101 and a number of Y electrodes are aligned in the longitudinal direction. The width of the X electrodes and the Y electrodes is narrower at the intersections between the Y electrodes and the X electrodes in order to reduce the capacitance at the intersections between the electrodes. These intersections are referred to as narrow portions. Accordingly, the Y electrodes have such a form that narrow portions and the other electrode portions (hereinafter referred to as pad portions) alternate in the direction in which the Y electrodes run. The X electrodes are placed between adjacent Y electrodes. The X electrodes run in the longitudinal direction of the touch panel 101 and a number of X electrodes are aligned in the lateral direction. Like the Y electrodes, the X electrodes have such a form that narrow portions and the pad portions alternate in the direction in which the X electrodes run.

Next, in order to make the description of the form of the pad portions of the X electrodes easy, the portions of the wires through which the X electrodes are connected to the wires for detection (or narrow portions of the X electrodes) are assumed to be the center of the X electrodes in the lateral direction. The form of the X electrodes in the pad portion is such that the area is smaller as the location is closer to the center of the adjacent X electrode and the area is greater as the location is closer to the center of the X electrode. Therefore, as for the area of an X electrode between two adjacent X electrodes, for example XP1 and XP2, the area of the electrode XP1 in the pad portion is the greatest in the vicinity of the center of the electrode XP1, and the area of the electrode XP2 is the smallest in the pad portion. Meanwhile, the area of the electrode XP1 is the smallest in the pad portion in the vicinity of the center of the electrode XP2, and the area of the electrode XP2 is the greatest in the pad portion.

FIG. 14 is a diagram showing the structure of the touch panel according to the second embodiment of the present invention, and is a cross sectional diagram showing the touch panel along line A-B in FIG. 13, which shows the arrangement of the electrodes. This cross sectional diagram shows only the layers that are necessary for describing the operation of the touch panel. In the figure, SUB and UP are transparent substrates, IF1 and IF2 are transparent insulating films, SP1 is spacers, which are beads, EL is a transparent elastic layer, and XP, YP and CL (conductive film) are electrodes for detection.

The touch panel according to the present embodiment is formed such that a transparent conductive film XP, a transparent first insulating film IF1, a transparent conductive film YP, a transparent second insulating film IF2, non-conductive spacers SP1 for providing space vis-à-vis a conductive film CL which becomes a Z electrode, a Z electrode CL which is a conductive layer and a transparent elastic layer EL are layered on top of a first transparent substrate SUB, which is a first substrate, in this order, and a second transparent substrate UP, which is a second substrate, is layered on the top. The rigidity of the transparent elastic layer EL is lower than the rigidity of the transparent substrate UP. As a result, the elastic layer EL deforms when the uppermost layer (second transparent substrate UP) is pressed, and in the case where it is difficult for the uppermost layer UP to deform, the area through which the elastic layer EL deforms is greater, and therefore, the sensitivity for detecting the capacitance can be increased.

Next, the layer structure of the touch panel is described by focusing on each layer starting from the one closest to the first transparent substrate SUB towards the furthermost one in order. The material and the thickness of the first transparent substrate SUB are not particularly limited, but it is preferable to select an appropriate material in accordance with the application from among inorganic glass, such as barium borosilicate glass and soda glass, chemical strengthening glass and resin films, such as of polyethersulfone (PES), polysulfone (PSF), polycarbonate (PC), polyarylate (PAR) and polyethylene terephthalate (PET).

In addition, the electrodes XP and YP are made of a transparent conductive film, which is not particularly limited as long as it is a thin film having a conductivity, and conventional ITO (indium tin oxide), ATO (antimony tin oxide), IZO (indium zinc oxide), and the like, can be used. The transparent conductive film (thickness: 50 A to 200 A) is formed in accordance with a spattering method so that the resistance on the surface becomes 500 $\Omega$ to 2000 $\Omega$, and then, a resist material is applied and patterned through exposure to light and in a developing process. The resist material at this time may be either of a positive type or of a negative type, and a pattern can be easily formed of an alkali developing type resist. After that, the ITO is patterned through etching. At this time, a hydrobromic acid solution or the like may be used as the etchant. As described in reference with FIG. 11, the conductive film CL can be made of a single material or can be carried on a resin film FL.

The X electrodes XP are formed in locations close to the first transparent substrate SUB, and then, an insulating film IF1 for insulating the X electrodes from the Y electrodes is formed. Next, the Y electrodes YP are formed. Here, the order in which the X electrodes XP and the Y electrodes YP are formed may be switched. After the Y electrodes YP, the second insulating film IF3 is provided so as to secure the insulation from the Z electrodes (conductive film CL) that are to be provided next. The film thickness of the first insulating film IF1 and the second insulating film IF2 may be determined by taking the dielectric constant of the insulating film material into consideration, and it is easy to adjust the film thickness for the relative dielectric constant of 2 to 4 so that the insulating films having a film thickness of 1 $\mu$m to 20 $\mu$m can be formed. As for the material for the insulating film layers, UV (ultraviolet rays) curing type resin materials, negative or positive type insulating film materials that can be developed in an alkali solution and thermosetting resin materials that can be cured when heated can be used, and alkali developing type insulating films can be easily formed.

The spacers SP1 are formed of polymer beads, glass beads and the like having a uniform particle size, and are appropriately scattered. The particle size of the beads, which defines the distance between the first insulating film IF2 formed on the first substrate and the Z electrodes (conductive film CL) can be in a range from 5 $\mu$m to 100 $\mu$m though it is preferable for it to be 20 $\mu$m or less. It is preferable for the beads to be scattered to have a density of 20 $\mu$m or more and at intervals of 10000 $\mu$m or less.

In addition, as shown in FIG. 15, the spacers SP2 are formed of a photo-curing resin material, and spacers in pillar form that are patterned in dots can be used. It is preferable for the spacers to be formed at intervals of 20 $\mu$m or higher and 10000 $\mu$m or lower through screen printing or the like. The form of the spacers can be freely selected from among circles, squares, and the like, and the diameter can be in the range from 5 $\mu$m to 100 $\mu$m though it is preferable for it to be 20 $\mu$m or less.

The transparent elastic layer EL is a rubber-like layer having an elasticity, and is not particularly limited as long as it has an elasticity. In order to increase the transmittance, however, materials that are transparent to visible light are preferable. Examples are acryl based viscous materials, vinyl acetate based viscous materials, urethane based viscous materials, epoxy resins, vinylidene chloride based resins, polyamide based resins, polyester based resins, synthetic rubber based viscous materials and silicone based resins, and from among these, acryl based viscous materials and silicone based resins, which have a high level of transparency, are preferable. Acryl based viscous materials can be gained by adding an additive, such as a tackifier or a filler, if necessary, to an acryl based polymer that is gained by polymerizing alkyl (meth)acrylate, (meth)acrylate or hydroxyalkyl (meth)acrylate, or a mixture of two or more of these in accordance with a publicly known polymerization method, such as a solution polymerization method, an emulsification polymerization method, a bulk polymerization method, a suspension polymerization method and a UV polymerization method. Typical examples of alkyl (meth)acrylate are butyl (meth)acrylate, isobutyl (meth)acrylate, hexyl (meth)acrylate, 2-ethylhexyl (meth)acrylate, iso-octyl (meth)acrylate, isononyl (meth)acrylate, allyl (meth)acrylate, lauryl (meth)acrylate and stearyl (meth)acrylate. In addition, rubbers, such as butyl rubber, fluorine rubber, ethylene-propylene-diene copolymer rubber (EPDM), acrylonitrile-butadiene rubber (NBR), chloroprene rubber (CR), natural rubber (NR), isoprene rubber (IR), styrene-butadiene rubber (SBR), butadiene rubber, ethylene-propylene rubber, silicone rubber, polyurethane rubber, polynorbornene rubber, styrene-butadiene-styrene rubber, epichlorohydlyn rubber, hydride of NBR, polysulfide rubber and urethane rubber can be used solely, or two or more of these can be mixed for use. It is preferable for the index of refraction of these rubbers and resins to be in a range from 1.4 to 1.8. It is preferable for the thickness of the formed film to be greater than the diameter of the spacers SP1 (greater than the space provided by the spacers SP1) so that the deformation resulting from the pressing is sufficiently great, and it is preferable for the film thickness to be 5 $\mu$m or greater. In the case where the elastic layer EL has a conductivity, it is not necessary for a conductive film CL to be separately provided. In order for the transparent elastic layer and the conductive layer to be provided as the same layer, it is possible to use a transparent elastic conductive resin layer where fine conductive particles are dispersed in a transparent resin, for example.

The transparent conductive film CL that becomes Z electrodes is not particularly limited as long as it is a thin film having a conductivity, and conventional ITO (indium tin oxide), ATO (antimony tin oxide), IZO (indium zinc oxide), and the like, can be used. The transparent conductive film is formed in accordance with a spattering method so that the resistance on the surface is 500 $\Omega$ to 2000 $\Omega$, and then, a resist material is applied, and the transparent conductive film is patterned so that X electrodes and Y electrodes are formed through exposure to light and in a developing process. At this time, the resist material may be of a positive type or of a negative type, and an alkali develop type resist film can be easily formed. After that, the ITO is patterned through etching. At this time, a hydrobromic acid solution or the like may be used as the etchant. In the case where the conductive film CL is formed so as to have a resistance on the surface of 10000 $\Omega$ to 10000000 $\Omega$, patterning is unnecessary and thin films where fine particles of conventional ITO (indium tin oxide), ATO (antimony tin oxide), IZO (indium zinc oxide), or the like, are dispersed in a transparent resin, and furthermore, thin films where fine particles having a conductivity, for example, fine metal particles of nickel, gold, silver or cupper, or fine insulating particles or fine resin particles which are plated with a metal are dispersed in a resin can be used. Moreover, fine particle made of a metal oxide or a metal fluoride of at least one type selected from the group consisting of $Al_2O_3$, $Bi_2O_3$, $CeO_2$ $In_2O_3$, ($In_2O_3$ $SinO_2$), $HfO_2$, $La_2O_3$, $MgF_2$, $Sb_2O_5$, ($Sb_2O_5$ ·$SinO_2$), $SiO_2$, $SnO_2$, $TiO_2$, $Y_2O_3$, ZnO and $ZrO_2$ can be used when dispersed in a transparent resin. In addition, organic conductive materials such as polyaniline, polyacetylene, polyethylene dioxythiophene, polypyrrole, polyisothianaphthene and polyisonaphthothiophene can be used when being applied to fine particles. In addition, it is preferable for the Z electrodes to have little absorption or scattering of light due to its index of refraction of light or the reflectance of light, and thus, it is preferable to select an appropriate material for the Z electrodes.

The material of the second transparent substrate UP is not particularly limited, but it is necessary for the substrate to convey the compression resulting from the pressing to the transparent elastic layer EL, and the sensitivity for detection has been increase according to the present invention, and therefore, inorganic glass, such as barium borosilicate glass and soda glass, and chemical strengthening glass can be used. In addition, flexible resins, such as polyethersulfone (PES), polysulfone (PSF), polycarbonate (PC), polyarylate (PAR) and polyethylene terephthalate (PET), can be used. Furthermore, a substrate having a thickness of 0.4 mm to 1.0 mm can be used in the case of an acryl plate, and a substrate having a thickness of 0.4 mm to 0.8 mm can be used in the case of a glass plate. The thickness of the plate can be set by taking into consideration the appearance of the panel and the sensitivity of the panel when pressed with a pen for input, and furthermore, the thickness of the entirety of the touch panel.

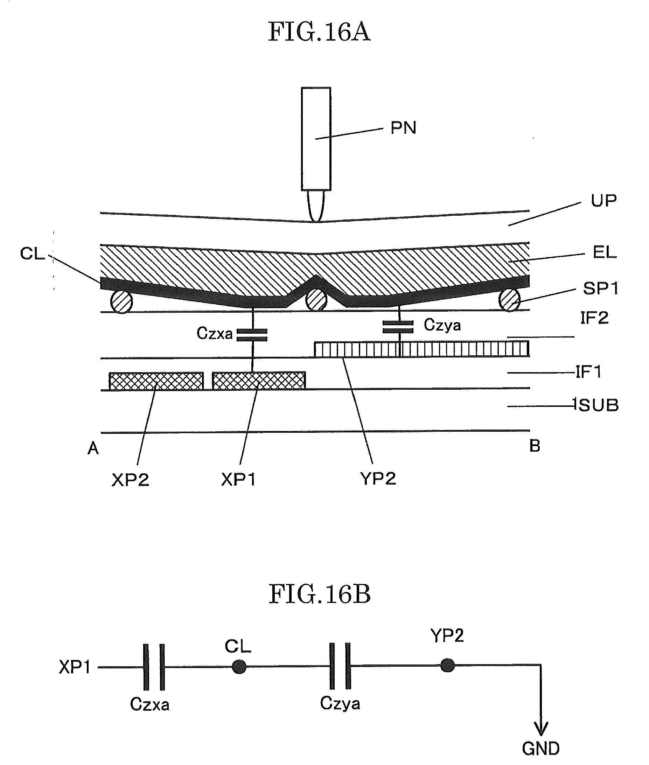

Next, a change in the capacitance during a touch operation on the touch panel according to the present invention in FIG. 14 is described in reference to FIG. 16.

FIG. 16 is a schematic diagram illustrating a change in the capacitance in the case where the input means PN for the touch operation is non-conductive and the distance between an X electrode XP and a Z electrode ZP as well as between a Y electrode YP and a Z electrode (conductive film CL) changes through pressure when touched. The same can be said if the distance between an X electrode XP and a Z electrode CL as well as between a Y electrode YP and a Z electrode CL changes when pressed with a conductive input means (a finger or the like).

In the case where no touch operation is carried out, the capacitance corresponds to a weak capacitance between the adjacent electrodes, an X electrode XP1 and a Y electrode YP2 with an insulating film IF1 in between. In the case where the electrode CL is pressed down through pressure when touched, the Y electrode YP is in a reset state, which is at the GND potential, when the capacitance of the X electrode XP1 is detected by the capacitance detecting unit 102. Here, the capacitance between the Z electrode CL and the X electrode XP1 is Czxa and the capacitance between the Z electrode CL and the Y electrode YP2 is Czya. Therefore, the synthetic capacitance as viewed from the X electrode XP1 is the capacitance resulting from the connection of Czxa and Czya in series as shown in FIG. 16B because the Z electrode CL is in a floating state. The synthetic capacitance Cxpa of the X electrode at this time can be represented by the following formula.

$$Cxpa = Czxa \cdot Czya/(Czxa + Czya) \dots \text{formula (1)}$$

The control operation unit 103 calculates the capacitance Cxpa of the electrode XP1 during a touch operation as a signal component of the electrode XP1. The capacitance during a touch operation and when there is no touch operation can be detected by the capacitance detecting unit 102, and therefore, the capacitance can be calculated as a signal component of the electrode XP1 by the control operation unit 103.

Thus, the distance between the X electrode XP and the Z electrode CL as well as between the Y electrode YP and the Z electrode CL changes when pressed even with a non-conductive input means, and therefore, it is possible to sense the coordinates of the point of input through the change in the capacitance.

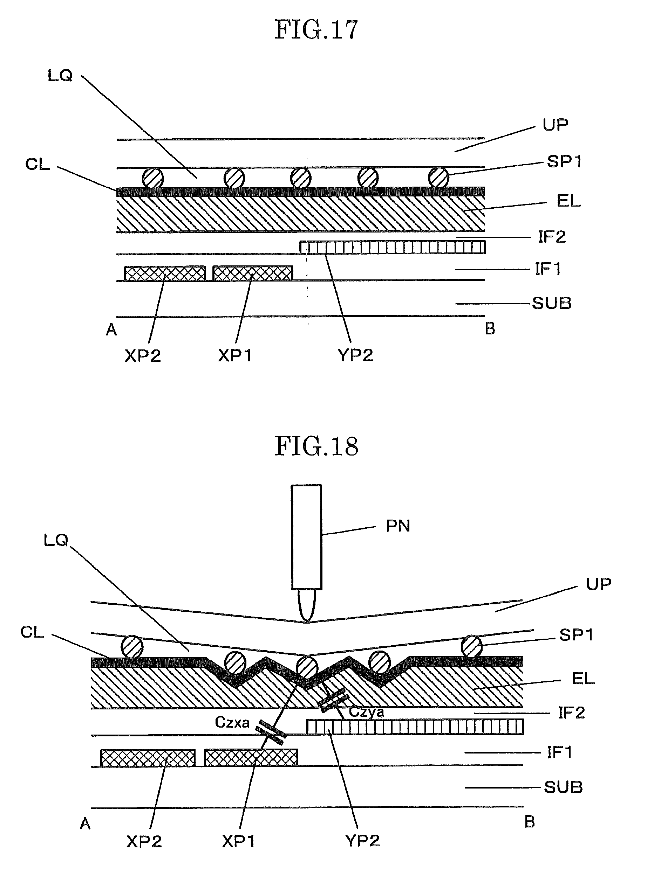

In addition, as shown in FIG. 17, the touch panel according to another embodiment of the present invention is a touch panel of a capacitive coupling type, having: a first substrate (SUB) on which a coordinate detecting electrode (XP1, XP2, YP2) for detecting XY coordinates of a point is formed; and a second substrate (UP) provided so as to face the above described first substrate, characterized in that the above described first substrate (SUB) is provide with an elastic layer (EL) having a rigidity lower than the above described second substrate and a conductive layer, the above described elastic layer and the above described conductive layer (CL) are layered in this order from the coordinate detecting electrode towards the above described second substrate, a non-conductive spacer (SP1) is provided between the above described second substrate (UP) and the conductive layer (CL), and a space created by the spacer is filled in with a liquid (LQ).

In the embodiment in FIG. 17, the distance between the XY coordinate detecting electrode (XP, YP) and the conductive layer (CL), which becomes Z electrodes is long as compared to the embodiments in FIGS. 11, 14 and 15, and therefore, there is a risk that the sensitivity for detecting the capacitance may be low. However, the space created by the spacers SP1 is filled in with a liquid (LQ) so that the reflection from the interface, which would be a border between the layers in the case where there is air in the space, is reduced, and therefore, it is possible to increase the transmittance.

In the embodiment in FIG. 17 as well, the conductive layer CL may be carried on a resin film as described in the embodiment in FIG. 11. At this time, the conductive layer CL is formed on the resin film on the above described substrate (SUB) side, which contributes to making the space between the electrodes narrower.

In addition, the elastic layer EL and the conductive layer CL may be the same layer. Furthermore, it is preferable for the elastic layer EL to be thicker than the space created by the spacers SP1 in the configuration.

Though the spacers SP1 are beads, as shown in FIG. 15, they may be protrusions formed on at least one of the facing surfaces of the first and second substrates. The thickness of the space created by the spacers is 20 $\mu$m or less, and thus, it is possible to increase the sensitivity for detecting the capacitance by reducing the thickness of the elastic layer EL. In addition, the narrower the space created by the spacers is, the smaller the amount of deformation is, and therefore, a faster input operation is possible.

Next, a change in the capacitance during a touch operation on the touch panel according to the embodiment in FIG. 17 is described in reference to FIG. 18.

FIG. 18 is a schematic diagram illustrating a change in the capacitance in the case where the input means PN for the touch operation is non-conductive and the distance between an X electrode XP and a Z electrode ZP as well as between a Y electrode YP and a Z electrode CL changes through pressure when touched. The same can be said if the distance between an X electrode XP and a Z electrode CL as well as between a Y electrode YP and a Z electrode CL changes when pressed with a conductive input means (a finger or the like).

In the case where no touch operation is carried out, the capacitance corresponds to a weak capacitance between the adjacent electrodes, an X electrode XP1 and a Y electrode YP2 with an insulating film IF1 in between. In the case where the Z electrode CL is pressed down through pressure when touched, the Y electrode YP is in a reset state, which is at the GND potential, when the capacitance of the X electrode XP1 is detected by the capacitance detecting unit 102. Here, the capacitance between the Z electrode CL and the X electrode XP1 is Czxa and the capacitance between the Z electrode CL and the Y electrode YP2 is Czya. Therefore, the synthetic capacitance as viewed from the X electrode XP1 is the capacitance resulting from the connection of Czxa and Czya in series because the Z electrode ZP is in a floating state. The synthetic capacitance Cxpa of the X electrode at this time can be represented by the same formula (1) as in the first embodiment.

The control operation unit 103 calculates the capacitance Cxpa of the electrode XP1 during a touch operation as a signal component of the electrode XP1. The capacitance during a touch operation and when there is no touch operation can be detected by the capacitance detecting unit 102, and therefore, the capacitance can be calculated as a signal component of the electrode XP1 by the control operation unit 103.

Thus, in the embodiment in FIG. 17 as well, the distance between the X electrode XP and the Z electrode CL as well as between the Y electrode YP and the Z electrode CL changes when the surface of the touch panel is pressed using a non-conductive input means, and therefore, it is possible to sense the coordinates of the point of input through the change in the capacitance.

As described above, the present invention can provide a touch panel having a high transmittance and a high sensitivity for detecting the capacitance where the detection signal is prevented from being delayed.

## Claims

1.  A touch panel of a capacitive coupling type, comprising: a first substrate (XYES) on which a coordinate detecting electrode for detecting XY coordinates of a point is formed; and a second substrate (UP) provided so as to face said first substrate (XYES), wherein

    said second substrate (UP) comprises an elastic layer (EL) having a rigidity lower than said second substrate (UP) and a conductive layer (CL), said elastic layer (EL) and said conductive layer (CL) being layered in this order towards said first substrate (XYES),
    a non-conductive spacer (SP) is provided between the coordinated detecting electrode and the conductive layer (CL), and
    a space created by the spacer is filled in with a liquid (LQ).

2.  The touch panel according to Claim 1, wherein the conductive layer (CL) is carried on a resin film (FL).

3.  The touch panel according to Claim 2, wherein the conductive layer (CL) is formed on the resin film (FL) on the first substrate side.

4.  The touch panel according to Claim 1, wherein the elastic layer (EL) and the conductive layer (CL) are the same layer.

5.  The touch panel according to Claim 1, wherein the elastic layer (EL) is thicker than the space created by the spacer (SP).

6.  The touch panel according to Claim 1, wherein an insulating film (IF) is formed on the coordinate detecting electrode and the spacer (SP) makes contact with the insulating film (IF).

7.  The touch panel according to Claim 1, wherein the spacer (SP) is a bead or a protrusion formed on one of the facing surfaces of said first and second substrates (XYES; UP) that face each other.

8.  The touch panel according to Claim 1, wherein the space created by the spacer (SP) is 20 $\mu$m or less.

9.  A touch panel of a capacitive coupling type, comprising: a first substrate (SUB) on which a coordinate detecting electrode for detecting XY coordinates of a point is formed; and a second substrate (UP) provided so as to face said first substrate (SUB), wherein

    said first substrate (SUB) comprises an elastic layer (EL) having a rigidity lower than said second substrate (UP) and a conductive layer (CL), said elastic layer (EL) and said conductive layer (CL) being layered in this order from the coordinate detecting electrode towards said second substrate (UP),
    a non-conductive spacer (SP1) is provided between said second substrate (UP) and the conductive layer, and
    a space created by the spacer (SP1) is filled in with a liquid (LQ).

10. The touch panel according to Claim 9, wherein the conductive layer (CL) is carried on a resin film.

**11.** The touch panel according to Claim 10, wherein the conductive layer (CL) is formed on the resin film on the first substrate side.

**12.** The touch panel according to Claim 9, wherein the elastic layer (EL) and the conductive layer (CL) are the same layer.

**13.** The touch panel according to Claim 9, wherein the elastic layer (EL) is thicker than the space created by the spacer (SP1).

**14.** The touch panel according to Claim 9, wherein the spacer (SP) is a bead or a protrusion formed on one of the facing surfaces of said first and second substrates (SUB, UP) that face each other.

**15.** The touch panel according to Claim 9, wherein the space created by the spacer (SP) is 20 $\mu$m or less.

**16.** The touch panel according to Claim 1 or 9, wherein a non-conductive pen, with which a surface of the second substrate (UP) is pressed, is used to operate the touch panel.

**17.** The touch panel according to Claim 1 or 9, wherein the touch panel is provided on a liquid crystal display device or an organic electroluminescent display device on the display screen side.

# FIG.1

FN

GP

Cx  Cy

IF2

IF1

TS

XE  YE

# FIG.2

PN

TF

FE

IE

Cx  Cy

TS

XE  YE

# FIG.3

# FIG.4

## FIG.5

## FIG.6

FIG.7

PN    UL(GLASS)    IE

3    4

BL

FIG.8A

FIG.8B

# FIG.9

EL

UP

CL

SP   XYES

# FIG.10

PN

EL

UP

CL

SP   XYES

# FIG.11

# FIG.12

# FIG.13

# FIG.14

# FIG.15

# FIG.16A

# FIG.16B

# FIG.17

LQ
UP
CL
SP1
EL
IF2
IF1
SUB
A
B
XP2
XP1
YP2

# FIG.18

PN
LQ
UP
CL
SP1
EL
IF2
Czxa
Czya
IF1
SUB
A
B
XP2
XP1
YP2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010237356 A
- JP 2009258888 A